# EUROPEAN PATENT SPECIFICATION

(11) **EP 3 972 707 B1**
(45) Date of publication and mention of the grant of the patent: **15.10.2025**
(21) Application number: 20810281.4
(22) Date of filing: 21.05.2020
(51) Int. Cl.: A63B 59/70, A63B 59/20, B29C 64/10, A63B 59/50, B33Y 80/00

(54) **HOCKEY STICK OR OTHER SPORTING IMPLEMENT**
HOCKEYSCHLÄGER ODER ANDERES SPORTGERÄT
BÂTON DE HOCKEY OU AUTRE ACCESSOIRE DE SPORT

(30) Priority: 21.05.2019 US 201962850831 P; 01.08.2019 US 201962881687 P
(43) Date of publication of application: 30.03.2022
(73) Proprietor: Bauer Hockey Ltd., Blainville, Québec J7C 0N9 (CA)
(72) Inventor: KRICK, Thierry, Québec J0P 1B0 (CA); LAPERRIERE, Jean-Francois, Québec J0R 1T0 (CA); ROUZIER, Edouard, Montreal, Québec H2J 4G4 (CA)
(74) Representative: Plasseraud IP
(86) International application number: PCT/CA2020/050686
(87) International publication number: WO 2020/232552

(56) References cited:
- WO-A1-2020/232555
- US-A1- 2015 018 136
- US-A1- 2015 328 512
- US-A1- 2016 135 537
- US-B2- 7 963 868
- US-B2- 9 486 679
- US-B2- 9 925 440

## Description

### FIELD

This disclosure relates to sporting implements and, more particularly, to hockey sticks and other sporting implements (e.g., lacrosse sticks).

### BACKGROUND

Sporting implements are used in various sports to strike, propel, or otherwise move a puck, ball, or other object.

For example, in hockey, a player uses a hockey stick to move, pass, and shoot a puck or ball during a game. Notably, the hockey stick comprises a shaft for holding by the player and a blade for handling the puck or ball.

Hockey sticks are often desired to be lightweight and have various properties, such as strength, stiffness, flex, impact resistance, etc., which can sometimes be conflicting, require tradeoffs, or not be readily feasible, for cost, material limitations, manufacturability, and/or other reasons.

Similar issues often arise in other sports, such as lacrosse, in which users use sticks or other sporting implements.

For these and other reasons, there is a need for improvements in hockey sticks and other sporting implements.

Examples of background art can be found for example in the following documents: US 2015/328512 A1 describing sporting goods including microlattice structures; US 2016/135537 A1 describing customized footwear and also allows for the utilisation of the methods and algorithms to design and manufacture of sporting equipment like head and/or gripping portions of hockey sticks; and US 2015/018136 A1 describing carbon fiber or fiberglass lacrosse head.

### SUMMARY OF THE INVENTION

The present invention is directed to a hockey stick according to claim 1.

Additional features and embodiments of the invention are defined in the dependent claims.

### SUMMARY OF THE DISCLOSURE

According to various aspects, this disclosure relates to a hockey stick or other sporting implement designed to enhance its use, performance and/or manufacturing, including, for example, by being lightweight, having improved strength, flex, stiffness, impact resistance and/or other properties, reducing scrap or waste during its construction, and/or enhancing other aspects of the hockey stick or other sporting implement. For instance, in some embodiments, the hockey stick or other sporting implement may include a structure that is open, such as by being latticed (e.g., trussed), and/or made by additive manufacturing, selective material positioning, etc.

These and other aspects of this disclosure will now become apparent to those of ordinary skill upon review of a description of embodiments that follows in conjunction with accompanying drawings.

### BRIEF DESCRIPTION OF DRAWINGS

A detailed description of embodiments is provided below, by way of example only, with reference to accompanying drawings, in which:
Figure 1 shows an embodiment of a sporting implement that is a hockey stick;
Figure 2 is a top view of a bottom portion of a shaft of the hockey stick and a blade of the hockey stick;
Figure 3 is a rear view of the bottom portion of the shaft of the hockey stick and the blade of the hockey stick;

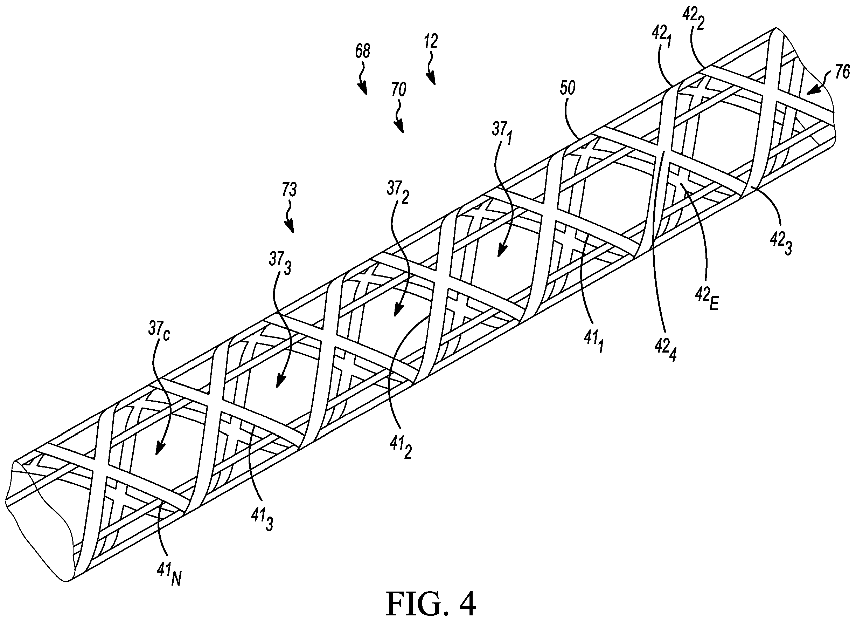

Figure 4 is an embodiment of a lattice comprised in the hockey stick;
Figure 5 is a variant of the hockey stick;
Figure 6 is a portion of the shaft of the hockey stick;
Figures 7 to 11 show examples of framework of the lattice;
Figures 12 and 13 show elongate members of the lattice forming a node in accordance with an embodiment;
Figures 14 and 15 show the elongate members of the lattice forming the node in accordance with another embodiment;
Figures 16 to 21 show cross-sectional shapes of the elongate members of the lattice in accordance with various embodiments;
Figures 22 to 27 show cross-sectional structures of the elongate members of the lattice in accordance with various embodiments;
Figures 28 shows a cross-section of a truss the lattice at the shaft of the hockey stick;
Figures 29 to 33 show variants of the cross-section of a truss the lattice at the shaft of the hockey stick;
Figures 34 to 37 show a cross-section of the shaft of the hockey stick in accordance with various embodiments;
Figures 38 and 39 show cross-sections of the blade of the hockey stick;
Figure 40 shows an intersection between two zones of the lattice having different voxel sizes;
Figure 41 shows two distinct non-hollow lattices having different voxel sizes;
Figure 42 shows an intersection between two zones of the lattice having elongate members and/or nodes of different thicknesses (or different "struts size");
Figure 43 shows three distinct non-hollow lattices having elongate members and/or nodes of different thicknesses (or different "struts size");
Figures 44A to 44H shows a manufacturing of the lattice in accordance with an embodiment;
Figure 45 shows a variant of the lattice;
Figure 46 to 57 show variants of the hockey stick;
Figure 58 shows another embodiment wherein the sporting implement is a goalie stick;
Figure 59 shows another embodiment wherein the sporting implement is a lacrosse stick;
Figure 60 shows another embodiment wherein the sporting implement is a ball bat; and
Figure 61 shows an example of a test for determining the strength of the sporting implement.

It is to be expressly understood that the description and drawings are only for purposes of illustrating certain embodiments and are an aid for understanding. They are not intended to be and should not be limiting.

### DETAILED DESCRIPTION OF EMBODIMENTS

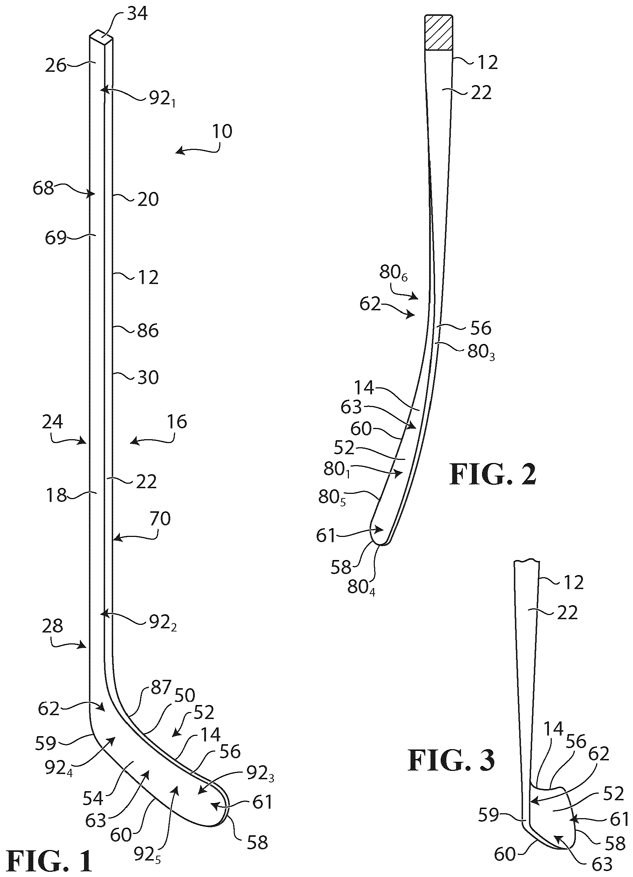

Figure 1 shows an embodiment of a sporting implement 10 for use by a user engaging in a sport. The sporting implement 10 comprises an elongate holdable member 12 configured to be held by the user and an object-contacting member 14 configured to contact an object (e.g., a puck or ball) intended to be moved in the sport. In this embodiment, the sport is hockey and the sporting implement 10 is a hockey stick for use by the user, who is a hockey player, to pass, shoot or otherwise move a puck or ball. The elongate holdable member 12 of the hockey stick 10 is a shaft, which comprises a handle 20 of the hockey stick 10, and the object-contacting member 14 of the hockey stick 10 is a blade.

In this embodiment, as further discussed later, the hockey stick 10 is designed to enhance its use, performance and/or manufacturing, including, for example, by being lightweight, having improved strength, flex, stiffness, impact resistance and/or other properties, reducing scrap or waste during its construction, and/or enhancing other aspects of the hockey stick 10. For instance, in some embodiments, the hockey stick 10 may include a structure that is open, such as by being latticed (e.g., trussed), and/or made by additive manufacturing, selective material positioning, etc.

The shaft 12 is configured to be held by the player to use the hockey stick 10. A periphery 30 of the shaft 12 includes a front surface 16 and a rear surface 18 opposite one another, as well as a top surface 22 and a bottom surface 24 opposite one another. Proximal and distal end portions 26, 28 of the shaft 12 are spaced apart in a longitudinal direction of the shaft 12, respectively adjacent to the handle 20 and the blade 14, and define a length of the shaft 12. A length of the hockey stick 10 is measured from a proximal end 34 of the shaft 12 along the top surface 22 of the shaft 12 through the blade 14.

A cross-section of the shaft 12 may have any suitable configuration. For instance, in this embodiment, the cross-section of the shaft 12 has a major axis 36 which defines a major dimension *D* of the shaft's cross-section and a minor axis 38 which defines a minor dimension *W* of the shaft's cross-section. In this example, the cross-section of the shaft 12 is generally polygonal. More particularly, in this example, the cross-section of the shaft 12 is generally rectangular, with the front surface 16, the rear surface 18, the top surface 22, and the bottom surface 24 being generally flat. Corners between these surfaces of the shaft 12 may be rounded or beveled.

The shaft 12 may have any other suitable shape and/or be constructed in any other suitable way in other embodiments. For example, in some embodiments, the cross-section of the shaft 12 may have any other suitable shape (e.g., the front surface 16, the rear surface 18, the top surface 22, and/or the bottom surface 24 may be curved and/or angular and/or have any other suitable shape, possibly including two or more sides or segments oriented differently, such that the cross-section of the shaft 12 may be pentagonal, hexagonal, heptagonal, octagonal, partly or fully curved, etc.). As another example, the cross-section of the shaft 12 may vary along the length of the shaft 12.

The blade 14 is configured to allow the player to pass, shoot or otherwise move the puck or ball. A periphery 50 of the blade 14 comprises a front surface 52 and a rear surface 54 opposite one another, as well as a top edge 56, a toe edge 58, a heel edge 59, and a bottom edge 60. The blade 14 comprises a toe region 61, a heel region 62, and an intermediate region 63 between the toe region 61 and the heel region 62. The blade 14 has a longitudinal direction that defines a length of the blade 14, a thicknesswise direction that is normal to the longitudinal direction and defines a thickness of the blade 14, and a heightwise direction that is normal to the longitudinal direction and defines a height of the blade 14.

A cross-section of the blade 14 may have any suitable configuration. For instance, in this embodiment, the cross-section of the blade 14 varies along the longitudinal direction of the blade 14 (e.g., tapers towards the toe region 61 of the blade 14), with the front surface 52 and the rear surface 54 curving so that the front surface 52 is concave and the rear surface 54 is convex. Corners between the front surface 52, the rear surface 54, the top edge 56, the toe edge 58, the heel edge 59, and the bottom edge 60 may be rounded or beveled.

The blade 14 may have any other suitable shape and/or be constructed in any other suitable way in other embodiments. For example, in some embodiments, the cross-section of the blade 14 may have any other suitable shape (e.g., the front surface 52, the rear surface 54, the top edge 56, the toe edge 58, the heel edge 59, and the bottom edge 60 may be curved differently and/or angular and/or have any other suitable shape, etc.).

The shaft 12 and the blade 14 may be interconnected in any suitable way. For instance, in this embodiment, the shaft 12 and the blade 14 are integrally formed with one another (i.e., at least part of the shaft 12 and at least of the blade 14 are integrally formed together) such that they constitute a one-piece stick. In other embodiments, the blade 14 may be secured to and removable from the shaft 12 (e.g., by inserting a shank of the blade 14, which may include a tenon, into a cavity of the shaft 12).

In this embodiment, the hockey stick 10 includes an open structure 68 and a covering 69 that covers at least part of the open structure 68. This may reduce a weight of the hockey stick 10, enhance properties such as the strength, the stiffness, the flex, the impact resistance, and/or other characteristics of the hockey stick 10, etc.

More particularly, in this embodiment, at least part of the hockey stick 10 is latticed, i.e., comprises a lattice 70. Thus, in this example, the lattice 70 constitutes at least part of the shaft 12 and/or at least part of the blade 14. Specifically, in this example, the shaft 12 includes a portion 71 of the lattice 70, while the blade 14 includes another portion 73 of the lattice 70. In this embodiment, the lattice 70 occupies at least a majority (i.e., a majority or an entirety) of the length of the shaft 12 and at least a majority (i.e., a majority or an entirety) of the length of the blade 14.

In some embodiments, the lattice 70 comprises a framework of structural members 41₁-41_{E} that intersect one another. In some embodiments, the structural members 41₁-41_{E} may be arranged in a regular arrangement repeating over the lattice 70. In some cases, the lattice 70 may be viewed as made up of unit cells 37₁-37_{C} each including a subset of the structural members 41₁-41_{E} that forms the regular arrangement repeating over the lattice 70. Each of these unit cells 37₁-37_{C} can be viewed as having a voxel, which refers to a notional three-dimensional space that it occupies. In other embodiments, the structural members 41₁-41_{E} may be arranged in different arrangements over the lattice 70 (e.g., which do not necessarily repeat over the lattice 70, do not necessarily define unit cells, etc.).

The lattice 70, including its structural members 41₁-41_{E}, may be configured in any suitable way.

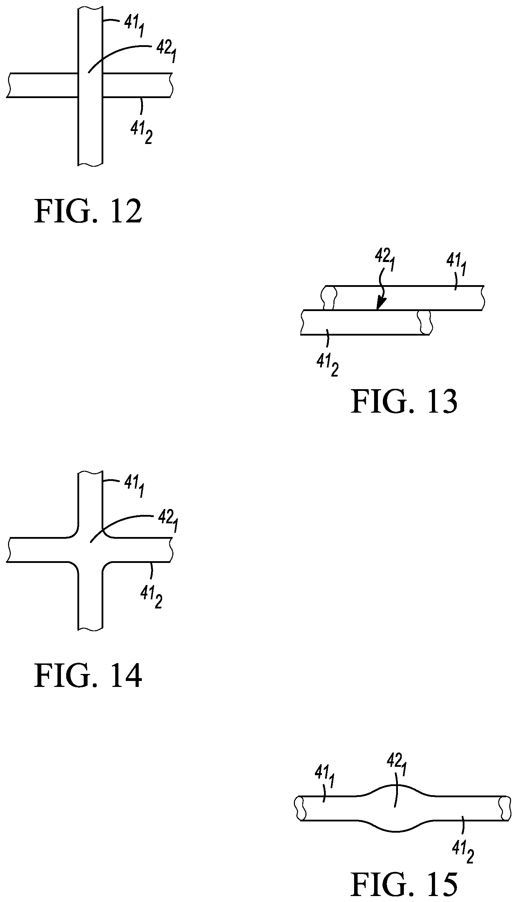

In this embodiment, the structural members 41₁-41_{E} are elongate members that intersect one another at nodes 42₁-42_{N}. The elongate members 41₁-41_{E} may sometimes be referred to as "beams" or "struts". Each of the elongate members 41₁-41_{E} may be straight, curved, or partly straight and partly curved. While in some embodiments at least some of the nodes 42₁-42_{N} (i.e. some of the nodes 42₁-42_{N} or every one of the nodes 42₁-42_{N}) may be formed by having the structural members 41₁-41_{E} forming the nodes affixed to one another (e.g., chemically fastened, via an adhesive, etc.), as shown in Figures 12 and 13, in some embodiments at least some of the nodes 42₁-42_{N} (i.e. some of the nodes 42₁-42_{N} or every one of the nodes 42₁-42_{N}) may be formed by having the structural members 41₁-41_{E} being unitary (e.g., integrally made with one another, fused to one another, etc.), as shown in Figures 14 and 15. Also, in this embodiment, the nodes 42₁-42_{N} may be thicker than respective ones of the elongate members 41₁-41_{E} that intersect one another thereat, as shown in Figure 13 and 15, while in other embodiments the nodes 42₁-42_{N} may have a same thickness as respective ones of the elongate members 41₁-41_{E} that intersect one another thereat.

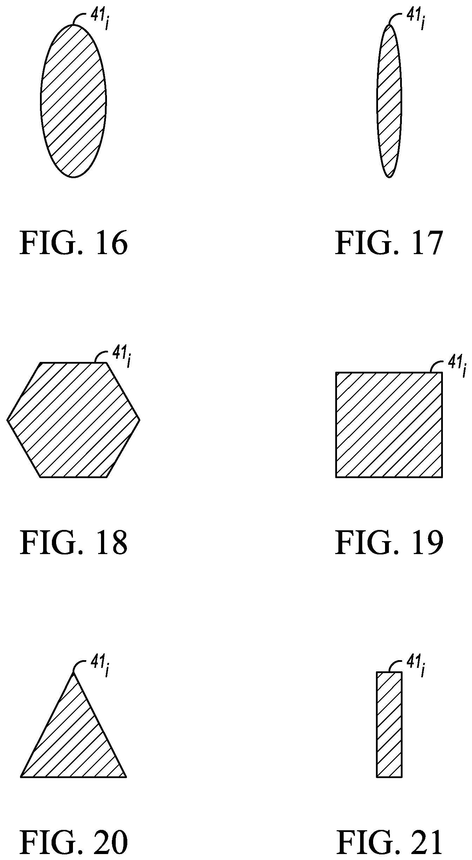

In this embodiment, the structural members 41₁-41_{E} may have any suitable shape, as shown in Figures 16 to 21. That is, a cross-section of a structural member 41ᵢ across a longitudinal axis of the structural member 41ᵢ may have any suitable shape, for instance: a circular shape, an oblong shape, an elliptical shape, a square shape, a rectangular shape, a polygonal shape (e.g. triangle, hexagon, and so on), etc.

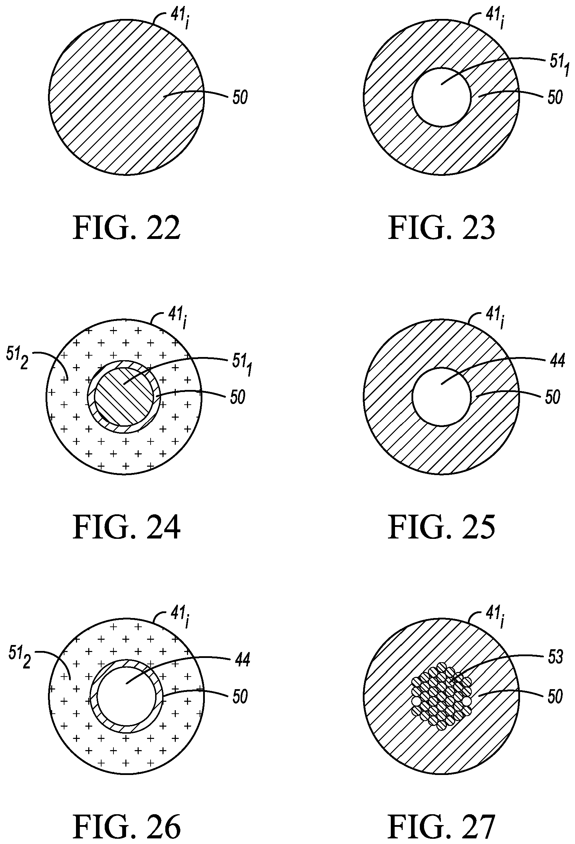

Moreover, in this embodiment, the structural member 41ᵢ may comprise any suitable structure and any suitable composition, as shown in Figures 22 to 27. As an example, the structural member 41ᵢ may be solid (i.e. without any void) and composed of a material 50, as shown in Figure 22. In another embodiment, the structural member 41ᵢ may comprise the material 50 and another material 51₁ inner to the material 50, as shown in Figure 23. In another embodiment, the structural member 41ᵢ may comprise the material 50, the other material 51₁ inner to the material 50 and another material 51₂ outer to the material 50, as shown in Figure 24.

In another embodiment, the structural member 41ᵢ may be composed of the material 50 and may comprise a void 44 that is not filled by any specific solid material, as shown in Figure 25. In another embodiment, the structural member 41ᵢ may comprise the material 50, another material outer to the material 50 and the void 44 that is not filled by any specific solid material, as shown in Figure 26. In another embodiment, the structural member 41ᵢ may comprise the material 50 and a plurality of reinforcements 53 (e.g. continuous or chopped fibers), as shown in Figure 27.

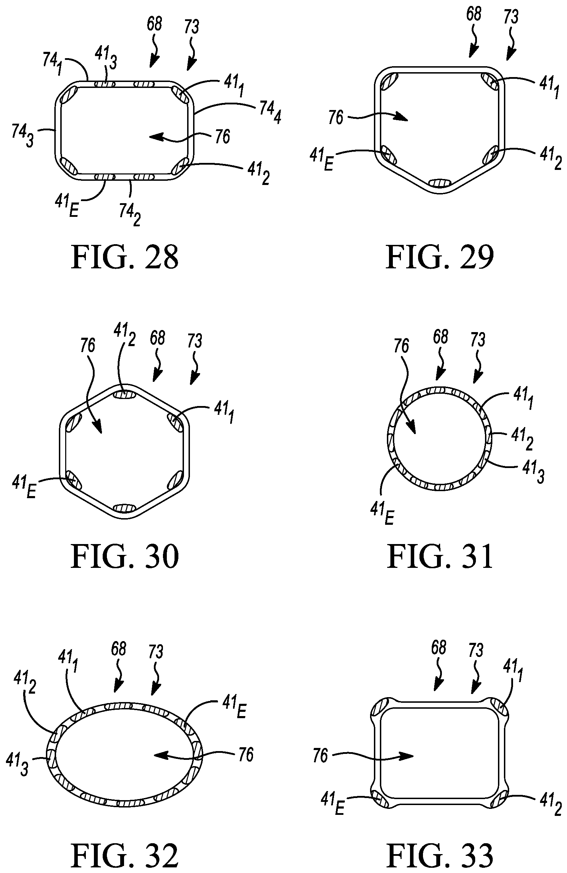

More particularly, in this embodiment, the lattice 70 includes a truss 73, as shown in Figure 28. In this example, the truss 73 constitutes the portion 71 of the lattice 70 of the shaft 12. The truss 73 comprises peripheral portions 74₁-74₄ that are part of walls 75₁-75₄ of the shaft 12 that define the periphery 30 of the shaft 12, including its front surface 16, rear surface 18, top surface 22 and bottom surface 24. Each of the peripheral portions 74₁-74₄ of the truss 73 includes respective ones of the elongate members 41₁-41_{E} and the nodes 42₁-42_{N} of the lattice 70. A front one of the peripheral portions 74₁-74₄ of the truss 73 is part of a front one of the walls 75₁-75₄ of the shaft 12 that includes its front surface 16, a rear one of the peripheral portions 74₁-74₄ of the truss 73 is part of a rear one of the walls 75₁-75₄ of the shaft 12 that includes its rear surface 18, a top one of the peripheral portions 74₁-74₄ of the truss 73 is part of a top one of the walls 75₁-75₄ of the shaft 12 that includes its top surface 22, and a bottom one of the peripheral portions 74₁-74₄ of the truss 73 is part of a bottom one of the walls 75₁-75₄ of the shaft 12 that includes its bottom surface 24.

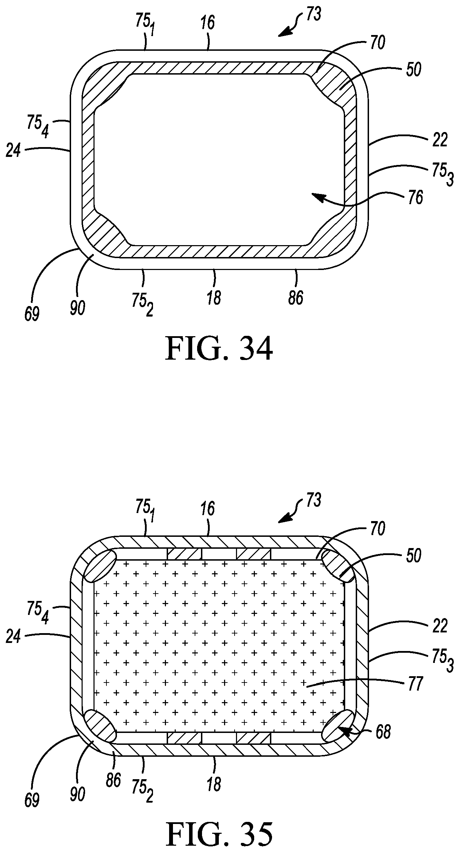

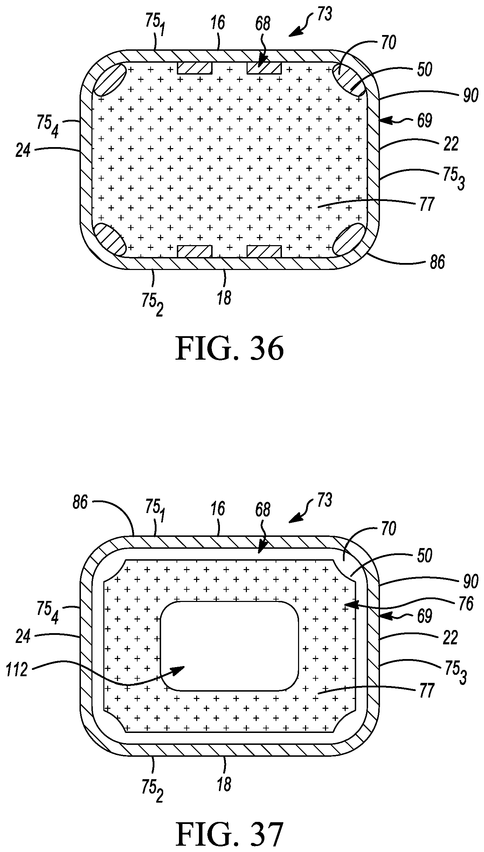

In this example, between its peripheral portions 74₁-74₄, the truss 73 includes a void 76, as shown in Figure 34. In this embodiment, the shaft 12 comprises a core 77 disposed in the void 76 of the truss 73, as shown in Figures 35 and 36. The core 77 may be entirely disposed inside the lattice 70 such that it does not engage a surface of the covering 69, as shown in Figure 35, although alternatively the core 77 may engage the lattice 70 and the inner surface of the covering 69, in the embodiment shown in Figure 36. For instance, the core 77 may include one or more internal members of foam, elastomeric material, etc. Alternatively, in other embodiments, the void 76 of the truss 73 may be hollow (i.e., not contain any core), or may be filled by the core 77 having a shape defining an inner void 112.

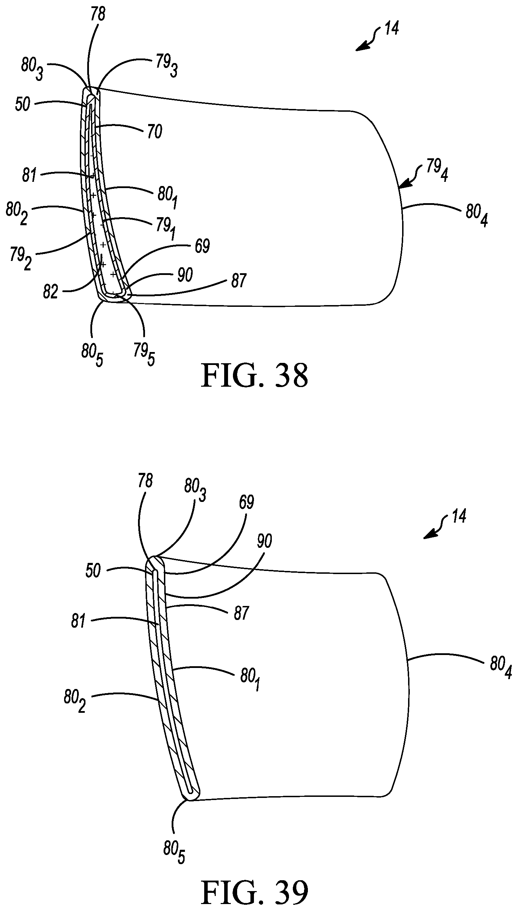

Also, in this embodiment, the lattice 70 includes another truss 78, as shown in Figures 38 and 39. In this example, the truss 78 constitutes the portion 73 of the lattice 70 of the blade 14. The truss 78 comprises peripheral portions 79₁-79₆ that are part of walls 80₁-80₆ of the blade 14 that define the periphery 50 of the blade 14, including its front surface 52, rear surface 54, top edge 56, toe edge 58, heel edge 59, and bottom edge 60. Each of the peripheral portions 79₁-79₆ of the truss 78 includes respective ones of the elongate members 41₁-41_{E} and the nodes 42₁-42_{N} of the lattice 70. A front one of the peripheral portions 79₁-79₆ of the truss 78 is part of a front one of the walls 80₁-80₆ of the blade 14 that includes its front surface 52, a rear one of the peripheral portions 79₁-79₆ of the truss 78 is part of a rear one of the walls 80₁-80₆ of the blade 14 that includes its rear surface 54, a top one of the peripheral portions 79₁-79₆ of the truss 78 is part of a top one of the walls 80₁-80₆ of the blade 14 that includes its top edge 56, a toe one of the peripheral portions 79₁-79₆ of the truss 78 is part of a toe one of the walls 80₁-80₆ of the blade 14 that includes its toe edge 48, a heel one of the peripheral portions 79₁-79₆ of the truss 78 is part of a heel one of the walls 80₁-80₆ of the blade 14 that includes its heel edge 59, and a bottom one of the peripheral portions 79₁-79₆ of the truss 78 is part of a bottom one of the walls 80₁-80₆ of the blade 14 that includes its bottom edge 60.

In this example, between its peripheral portions 79₁-79₆, the truss 78 includes a void 81. In this embodiment, the blade 14 comprises a core 82 disposed in the void 81 of the truss 78. For instance, the core 82 may include one or more internal members of foam, elastomeric material, etc. Alternatively, in other embodiments, the void 81 of the truss 78 may be hollow (i.e., not contain any core).

Material 50 of the lattice 70 can be of any suitable kind. In this embodiment, the material 50 is composite material. More particularly, in this embodiment, the composite material 50 is fiber-reinforced composite material comprising fibers disposed in a matrix. For instance, in some embodiments, the material 50 may be fiber-reinforced plastic (FRP - a.k.a., fiber-reinforced polymer), comprising a polymeric matrix may include any suitable polymeric resin, such as a thermoplastic or thermosetting resin, like epoxy, polyethylene, polypropylene, acrylic, thermoplastic polyurethane (TPU), polyether ether ketone (PEEK) or other polyaryletherketone (PAEK), polyethylene terephthalate (PET), polyvinyl chloride (PVC), poly(methyl methacrylate) (PMMA), polycarbonate, acrylonitrile butadiene styrene (ABS), nylon, polyimide, polysulfone, polyamide-imide, self-reinforcing polyphenylene, polyester, vinyl ester, vinyl ether, polyurethane, cyanate ester, phenolic resin, etc., a hybrid thermosetting-thermoplastic resin, or any other suitable resin, and fibers such as carbon fibers, glass fibers, polymeric fibers such as aramid fibers (e.g., Kevlar fibers), boron fibers, silicon carbide fibers, metallic fibers, ceramic fibers, etc. In some embodiments, the fibers of the fiber-reinforced composite material 50 may be provided as layers of continuous fibers, such as pre-preg (i.e., pre-impregnated) tapes of fibers (e.g., including an amount of resin) or as continuous fibers deposited (e.g., printed) along with rapidly-curing resin forming the polymeric matrix. In other embodiments, the fibers of the fiber-reinforced composite material 50 may be provided as fragmented (e.g., chopped) fibers dispersed in the polymeric matrix.

In some embodiments, the material 50 of the lattice 70 may be identical throughout the lattice 70. In other embodiments, the material 50 of the lattice 70 may be different in different parts of the lattice 70. For example, in some embodiments, the material 50 of the portion 71 of the lattice 70 that is part of the shaft 12 may be different from the material 50 of the portion 73 of the lattice 70 that is part of the blade 14. Alternatively or additionally, in some embodiments, the material 50 of one region of the portion 71 of the lattice 70 that is part of the shaft 12 may be different from the material 50 of another region of the portion 71 of the lattice 70 that is part of the shaft 12, and/or the material 50 of one region of the portion 73 of the lattice 70 that is part of the blade 14 may be different from the material 50 of another region of the portion 73 of the lattice 70 that is part of the blade 14.

The material 50 of the lattice 70 may be polymeric material (e.g., not fiber-reinforced), metallic material, or ceramic material in other embodiments.

The lattice 70 of the hockey stick 10 may be designed to have properties of interest in various embodiments.

For example, in some embodiments, strength of the lattice 70 may be at least 800N, in some cases at least 1000N, some cases at least 1100N, some cases at least 1200N, and in some cases at least 1300N, and/or in some cases no more than 2000N, in some cases no more than 1500N, in some cases no more than 1400N, in some cases no more than 1300N, in some cases no more than 1200N, in some cases no more than 1100N, in some cases no more than 1000N, in some cases even less.

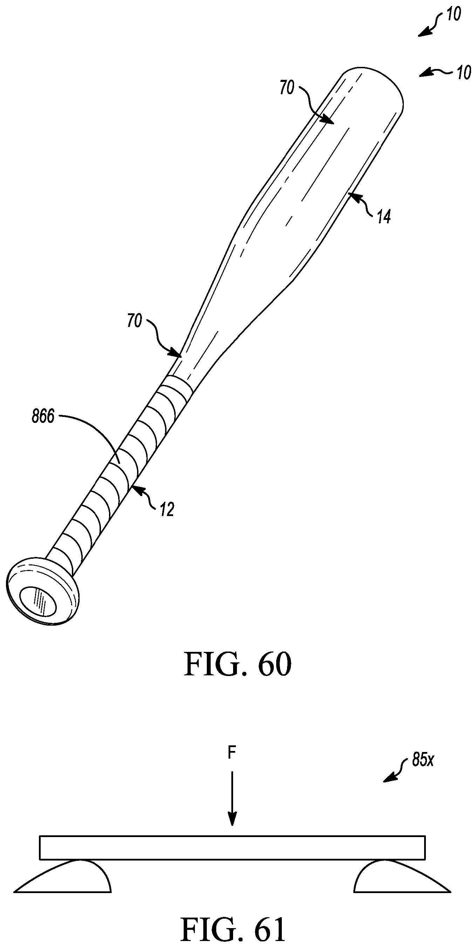

The strength of the lattice 70 may be measured by a 3-points-bending test to failure, as shown in Fig 61. In this example, the supports used for the 3-points-bending test to failure may be spaced from one another by a distance of approximately 1050 mm, while the strength corresponds to the force applied at the midpoint between the supports.

In some embodiments, the lattice 70 may include distinct zones 92₁-92_{Z} that are structurally different from one another. For instance, this may be useful to modulate properties, such as the strength, flex, stiffness, etc., of the zones 92₁-92_{Z} of the lattice 70.

For example, the zones 92₁-92_{Z} of the lattice 70 may include a zone 92₁ at the proximal end portion 26 of the shaft 12, a zone 92₂ at the distal end portion 28 of the shaft 12, a zone 92₃ at the toe region 61 of the blade 14, a zone 92₄ at the heel region 62 of the blade 14, and a zone 92₅ at the intermediate region 63 of the blade 14.

In this embodiment, delimitations of the zones 92₁-92_{Z} of the lattice 70 are configured to match different parts of the hockey stick 10 which may be subject to different stresses and may require different mechanical properties. Accordingly, the zones 92₁-92_{Z} of the lattice 70 may have different mechanical properties to facilitate puck handling, to increase power transmission and/or energy transmission from the hockey stick 10 to the puck during wrist shots and/or slap shots, to lighten the hockey stick, to increase impact resistance of the hockey stick 10, to increase elongation at break of the hockey stick 10, to position a kickpoint, to reduce manufacturing costs, and so on.

Mechanical properties of the zones 92₁-92_{Z} of the lattice 70 may be achieved by any suitable means.

For example, in some embodiments, a shape of the unit cells 37₁-37_{C} of each zone 92i may be pre-determined to increase or diminished the aforementioned mechanical properties.

As another example, in some embodiments, the voxel (or size) of the unit cells 37₁-37_{c} of each zone 92ᵢ may be pre-determined to increase or diminished the aforementioned mechanical properties.

As another example, in some embodiments, a thickness of elongate members 41₁-41_{E} of each zone 92ᵢ may be pre-determined to increase or diminished the aforementioned mechanical properties..

As another example, in some embodiments, the material 50 of each zone 92ᵢ may be pre-determined to increase or diminished the aforementioned mechanical properties.

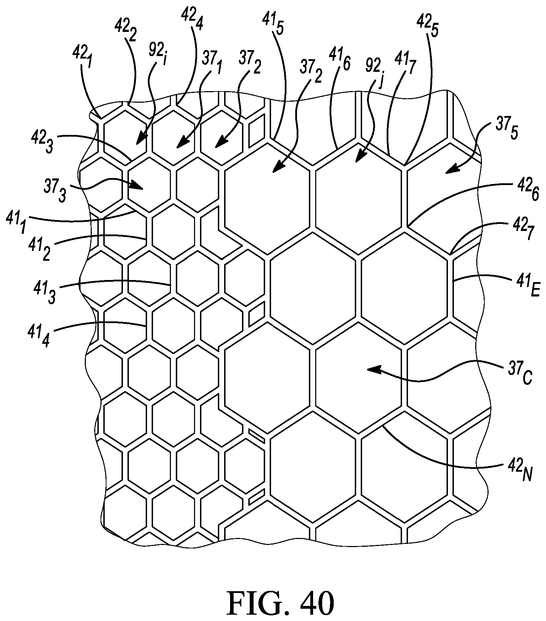

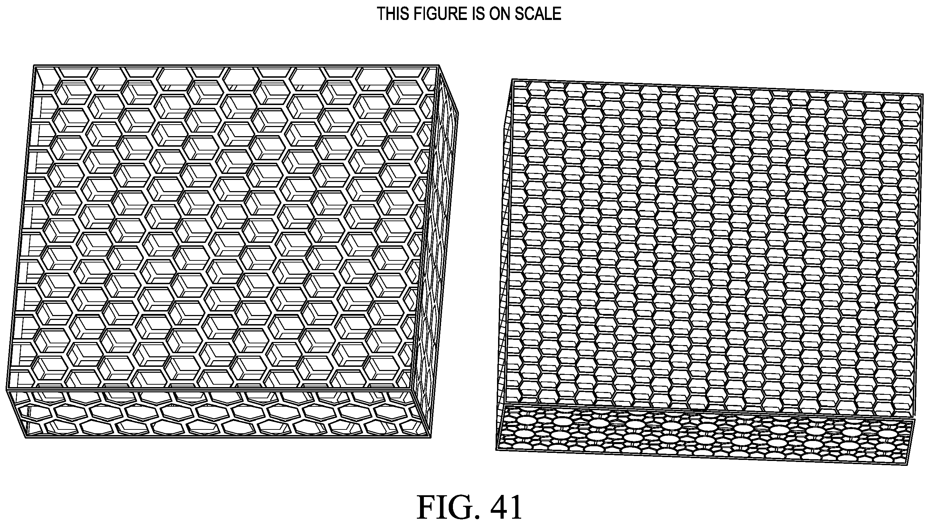

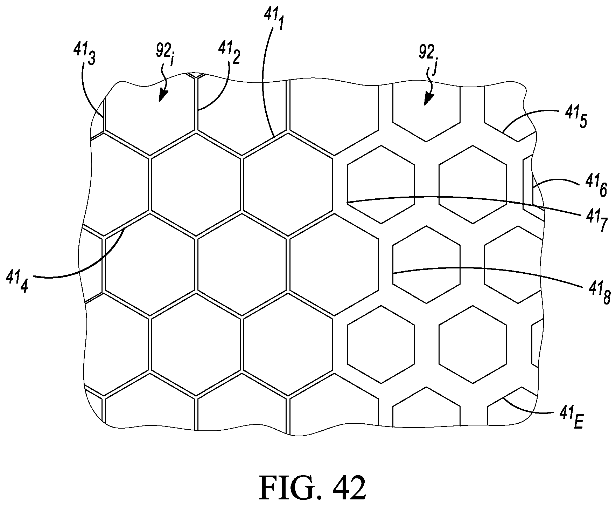

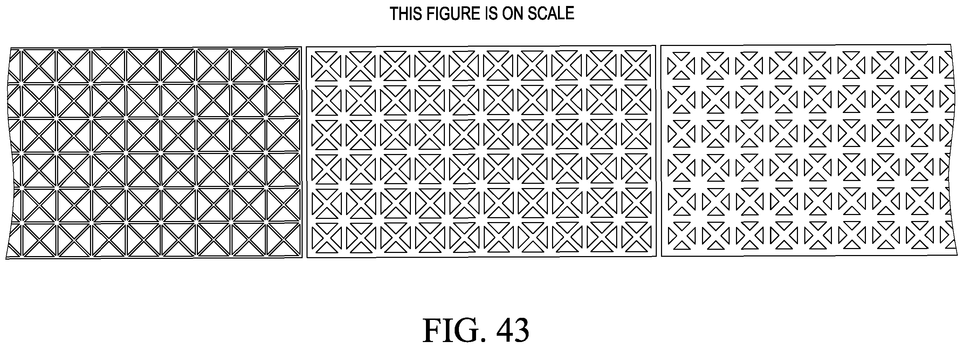

As such, in some embodiments, the shape of the unit cells 37₁-37_{C} (and thus the shape of the elongate members 41₁-41_{E} and/or nodes 42₁-42_{N}), the voxel (or size) of the unit cells 37₁-37_{c}, a thickness of elongate members 41₁-41_{E} of each zone 92ᵢ and/or the material 50 of each zone 92ᵢ may vary between the zones 92₁-92_{Z}. For instance, in some embodiments, adjacent ones of the nodes 42₁-42_{N} in one region 92ᵢ of the lattice 70 may be located closer to one another than adjacent ones of the nodes 42₁-42_{N} in another region of the lattice 70, as shown in Figure 40 and 41, and/or the thickness of the elongate members 41₁-41_{E} and nodes 42₁-42_{N} in one region 92ᵢ of the lattice 70 may be greater than the thickness of the elongate members 41₁-41_{E} and nodes 42₁-42_{N} in another region 92ⱼ of the lattice 70, as shown in Figures 42 and 43.

In this embodiment, the distinct zones 92₁-92_{Z} of the lattice 70 differ in stiffness and/or stiffness. For example, in some embodiments, a ratio of the stiffness of a given one of the zones 92₁-92_{Z} of the lattice 70 over the stiffness of another one of the zones 92₁-92_{Z} of the lattice 70 may be at least 10%, in some embodiments at least 20%, in some embodiments at least 30%, in some embodiments at least 40%, in some embodiments even more. Similarly, in some embodiments, a ratio of the strength of a given one of the zones 92₁-92_{Z} of the lattice 70 over the strength of another one of the zones 92₁-92_{Z} of the lattice 70 may be at least 10%, in some embodiments at least 20%, in some embodiments at least 30%, in some embodiments at least 40%, in some embodiments even more.

In this embodiment, the distinct zones 92₁-92_{Z} of the lattice 70 differ in resilience. For example, in some embodiments, a ratio of the resilience of a given one of the zones 92₁-92_{Z} of the lattice 70 over the resilience of another one of the zones 92₁-92z of the lattice 70 may be at least 5%, in some embodiments at least 10%, in some embodiments at least 20%, in some embodiments at least 30%, in some embodiments even more.

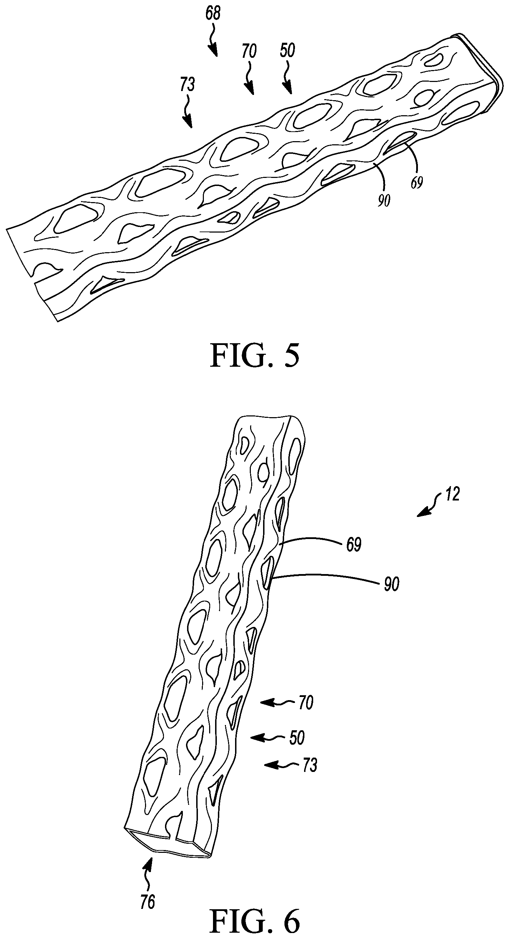

In this embodiment, the covering 69 may covers at least part of the open structure 68 of the hockey stick 10. In that sense, the covering 69 may be viewed as a "skin". In this embodiment, the covering 69 covers at least a majority (i.e., a majority or an entirety) of the lattice 70. More particularly, in this embodiment, the covering 69 covers the entirety of the lattice 70, as notably shown in Figure 6. The hockey stick 10 may thus externally appear like a conventional hockey stick, as its open structure 68 is concealed.

In other embodiments, the covering 69 may not cover the entirety of the lattice open structure 68 and may therefore comprise apertures, as shown in Figure 5.

In this embodiment, the shaft 12 includes a portion 86 of the covering 69, while the blade 14 includes another portion 87 of the covering 69. The portion 86 of the covering 69 thus covers the truss 73 of the shaft 12, whereas the portion 87 of the covering 69 covers the truss 78 of the blade 14.

Material 90 of the covering 69 can be of any suitable kind. In this embodiment, the material 90 is composite material. More particularly, in this embodiment, the composite material 90 is fiber-reinforced composite material comprising fibers disposed in a matrix. For instance, in some embodiments, the material 90 may be fiber-reinforced plastic (FRP - a.k.a., fiber-reinforced polymer), comprising a polymeric matrix may include any suitable polymeric resin, such as a thermoplastic or thermosetting resin, like epoxy, polyethylene, polypropylene, acrylic, thermoplastic polyurethane (TPU), polyether ether ketone (PEEK) or other polyaryletherketone (PAEK), polyethylene terephthalate (PET), polyvinyl chloride (PVC), poly(methyl methacrylate) (PMMA), polycarbonate, acrylonitrile butadiene styrene (ABS), nylon, polyimide, polysulfone, polyamide-imide, self-reinforcing polyphenylene, polyester, vinyl ester, vinyl ether, polyurethane, cyanate ester, phenolic resin, etc., a hybrid thermosetting-thermoplastic resin, or any other suitable resin, and fibers such as carbon fibers, glass fibers, polymeric fibers such as aramid fibers (e.g., Kevlar fibers), boron fibers, silicon carbide fibers, metallic fibers, ceramic fibers, etc. In some embodiments, the fibers of the fiber-reinforced composite material 50 may be provided as layers of continuous fibers, such as pre-preg (i.e., pre-impregnated) tapes of fibers (e.g., including an amount of resin) or as continuous fibers deposited (e.g., printed) along with rapidly-curing resin forming the polymeric matrix. In other embodiments, the fibers of the fiber-reinforced composite material 90 may be provided as fragmented (e.g., chopped) fibers dispersed in the polymeric matrix.

In some embodiments, the material 90 of the covering 69 may be identical throughout the covering 69. In other embodiments, the material 90 of the covering 69 may be different in different parts of the covering 69. For example, in some embodiments, the material 90 of the portion 86 of the covering 69 that is part of the shaft 12 may be different from the material 90 of the portion 87 of the covering 69 that is part of the blade 14. Alternatively or additionally, in some embodiments, the material 90 of one region of the portion 86 of the covering 69 that is part of the shaft 12 may be different from the material 90 of another region of the portion 86 of the covering 69 that is part of the shaft 12, and/or the material 90 of one region of the portion 87 of the covering 69 that is part of the blade 14 may be different from the material 90 of another region of the portion 87 of the covering 69 that is part of the blade 14.

In other embodiments, the material 90 of the covering 69 may be (non-fiber-reinforced) polymeric material, metallic material, or ceramic material.

The hockey stick 10, including the lattice 70 and the covering 69, may be manufactured in any suitable way.

For example, in some embodiments, the lattice 70 may be an additively-manufactured lattice that is additively manufactured, i.e., made by additive manufacturing, also known as 3D printing, in which the material 50 thereof initially provided as feedstock (e.g., as powder, liquid, filaments, fibers, and/or other suitable feedstock), which can be referred to as 3D-printed material, is added by a machine (i.e., a 3D printer) that is computer-controlled (e.g., using a digital 3D model such as a computer-aided design (CAD) file) to create it in its three-dimensional form (e.g., layer by layer, from a pool of liquid, applying continuous fibers, or in any other way, normally moldlessly, i.e., without any mold). This is in contrast to subtractive manufacturing (e.g., machining) where material is removed and molding where material is introduced into a mold's cavity.

Any 3D-printing technology may be used to make the lattice 70. For instance, in some embodiments, fused deposition modeling (FDM), digital light processing (DLP), stereolithography (SLA), selective laser sintering (SLS), material jetting (MJ), binder jetting (BJ), continuous-fiber 3D printing, and/or any other suitable 3D-printing technology may be used. Examples of suitable 3D-printing technologies may include those available from Carbon (www.carbon3d.com), EOS (https://www.eos.info/en), HP, (https://www8.hp.com/ca/en/printers/3d-printers.html), Arevo (https://arevo.com), and Continuous Composites (https://www.continuouscomposites.com/).

In this embodiment, as it includes the fiber-reinforced composite material 50, the lattice 70 may be 3D-printed using continuous-fiber 3D printing technology. For instance, in some embodiments, this may allow each of one or more of the fibers of the fiber-reinforced composite material 50 to extend along at least a significant part, such as at least a majority (i.e., a majority or an entirety), of a length of the lattice 70 (e.g., monofilament winding). This may enhance the strength, the impact resistance, and/or other properties of the hockey stick 10.

The lattice 70 can be designed and 3D-printed to impart its properties and functions, such as those discussed above, while helping to minimize its weight. The 3D-printed material 50 constitutes the lattice 70. Specifically, the elongate members 41₁-41_{E} and the nodes 42₁-42_{N} of the lattice 70 include respective parts of the 3D-printed material 50 that are created by the 3D-printer. Fibers may be printed by the 3D printer along with rapidly-curing resin to form the fiber-reinforced composite material 50.

The lattice 70 may be manufactured in any other suitable way in other embodiments, including by technology other than 3D printing.

For instance, in some embodiments, the lattice 70 may be provided by positioning pre-preg tapes of fibers (e.g., including an amount of resin) to form the elongate members 41₁-41_{E} and the nodes 42₁-42_{N} of the lattice 70 and heating it (e.g., in a mold) to form its fiber-reinforced composite material 50 once cured.

For instance, pre-preg tapes of fibers may be enrolled around a support 108 (e.g. a mandrel, foam, procured part, and so on) with a pre-determined pitch and a pre-determined angle to form a "green" lattice. The pre-determined pitch and pre-determined angle used to form the green lattice may contribute to determine the geometry of the unit cells 37₁-37_{C} and thus mechanical properties (e.g. stiffness) of the lattice 70.

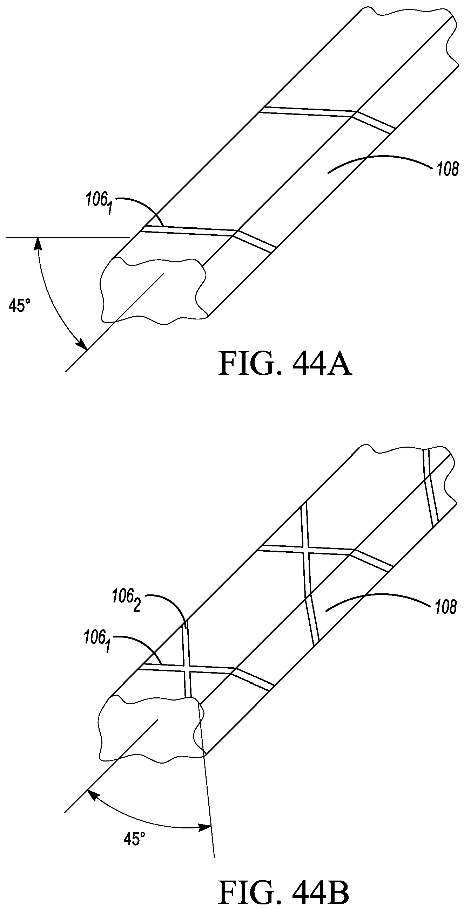

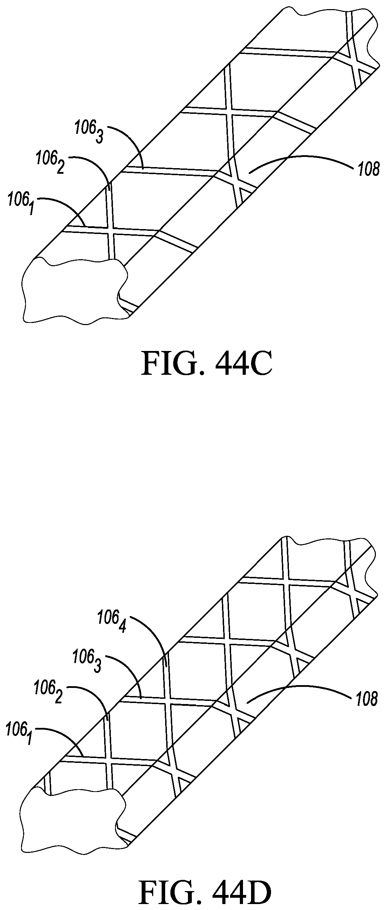

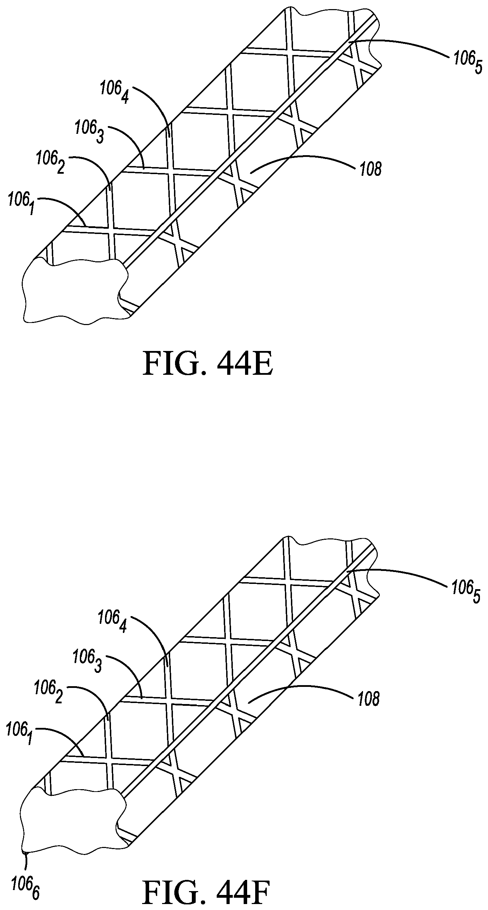

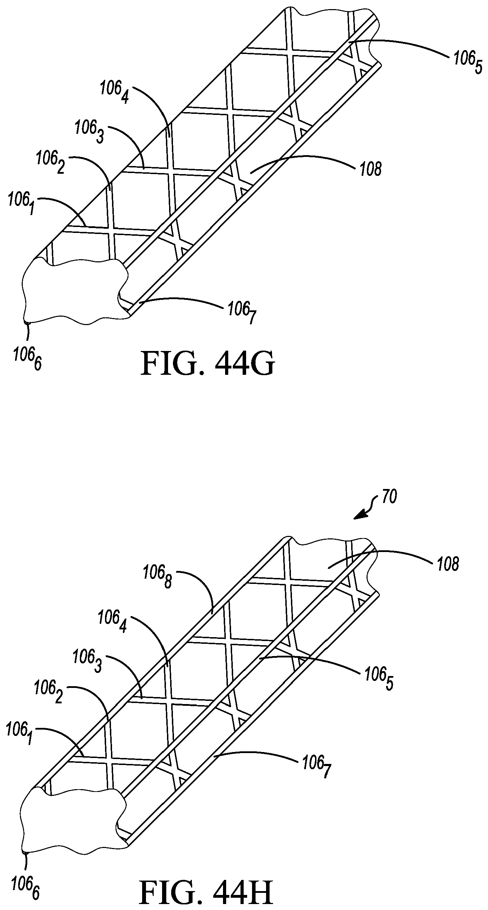

For example, in some embodiments, as shown in Figures 44A to 44H, the lattice 70 may comprise segments 106₁-106₈ each formed using one continuous string of pre-preg tape and the structural members 41₁-41_{E} may have a thickness of 1 mm. In order to form the lattice 70, the pre-preg tape may have a thickness of 1 mm and be enrolled successively around the support 108, at a pre-determined angle. For example, segments 106₅-106₈ forming edges (i.e. corners) of the lattice 70 may be enrolled at an angle of 0° relative to a longitudinal axis of the support, while segments 106₁, 106₃ may be enrolled at an angle of about 45° relative to a longitudinal axis of the support and segments 106₂, 106₄ may be enrolled at an angle of about -45° relative to a longitudinal axis of the support. Each time segments 106₁-106₈ cross one another, a node 42ᵢ may be created - each node 42ᵢ having a thickness that is superior to the thickness of the segments 106₁-106₈ in this embodiment.

As another example, in some embodiments, to obtain a similar lattice 70 using pre-preg tape having a thickness of 0.25 mm, four successive passes of the aforementioned steps may be repeated, which in comparison with the preceding embodiment may provide a lattice 70 having superior strength and interlaminar shear.

It is noted that, in other embodiments, width, thickness and material of the pre-preg tape used for manufacturing the lattice 70 may vary for each segment 106ᵢ and/or for each pass, and that any stage layers of material (e.g. the covering 69) may be added under or over the .

The obtained "green" 70 may be subsequently cured or molded, for example using an autoclave, vacuum molding, RTM, compression molding (e.g. with a bladder or a mandrel to control an external dimension of the lattice during and after molding), or so on.

The covering 69 may be provided about the lattice 70 in any suitable way in various embodiments.

For example, in some embodiments, the covering 69 may be an additively-manufactured covering that is additively manufactured, i.e., 3D-printed. Any 3D-printing technology may be used to make the covering 69, such as those discussed above. For instance, in some embodiments, the covering 69 may be 3D-printed using continuous-fiber 3D printing technology. This may allow each of one or more of the fibers of the fiber-reinforced composite material 90 to extend along at least a significant part, such as at least a majority (i.e., a majority or an entirety), of a length of the covering 69 (e.g., monofilament winding).

As another example, in some embodiments, the covering 69 may be provided by wrapping pre-preg tapes of fibers (e.g., including an amount of resin) about the lattice 70 and heating it (e.g., in a mold) to form its fiber-reinforced composite material 90 once cured.

The hockey stick 10, including the shaft 12 and the blade 14, may be implemented in various other ways in other embodiments.

For example, in some embodiments, the lattice 70 may have any suitable cross-section shape such as a pentagonal shape, a hexagonal shape, a round shape, an elliptical shape, and so on, as shown in Figures 29 to 34. Additionally, the shape of the cross-section of the lattice 70 may vary from a zone 92ᵢ to another 92ⱼ.

In this embodiment, the portion 73 of the lattice 70 that is part of the blade 14 may be structurally different from the portion 71 of the lattice 70 that is part of the shaft 12. For example, an average voxel of the unit cells 37₁-37_{C} of the portion 73 of the lattice 70 may be significantly smaller than an average voxel of the unit cells 37₁-37_{C} of the portion 71 of the lattice 70 and in some embodiments a ratio of the average voxel of the portion 73 over the average voxel of the portion 71 may be less than 0.95, in some embodiments less than 0.75, in some embodiments less than 0.50, in some embodiments less than 0.25, in some embodiments even less. As another example, the shape of the unit cells 37₁-37_{C} of the portion 73 of the lattice 70 may be different from the shape of the unit cells 37₁-37_{C} of the portion 71 of the lattice 70 such that the portion 73 is significantly stiffer than the portion 71. As another example, in some embodiments, the portion 73 of the lattice 70 that is part of the blade 14 comprises a framework defining a non-hollow lattice, while the portion 71 of the lattice 70 that is part of the shaft 12 comprises a framework defining a hollow lattice.

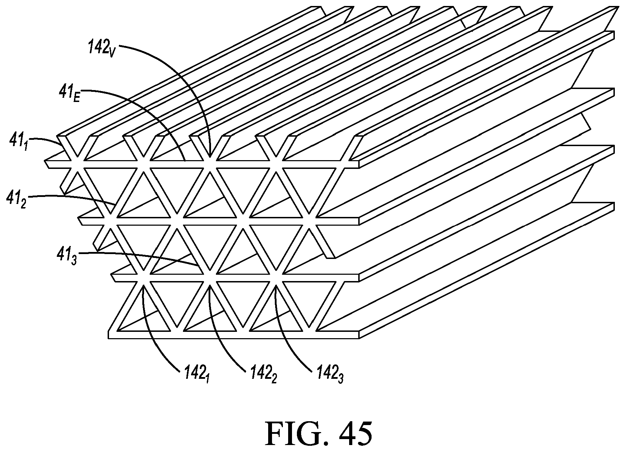

As another example, in some embodiments, the structural members 41₁-41_{E} of the lattice 70 may be implemented in various other ways. For example, in some embodiments, as shown in Figure 45, the structural members 41₁-41_{E} may be planar members that intersect one another at vertices 142₁-142_{V}. The planar members 41₁-41_{E} may sometimes be referred to as "faces". Each of the planar members 41₁-41_{E} may be straight, curved, or partly straight and partly curved.

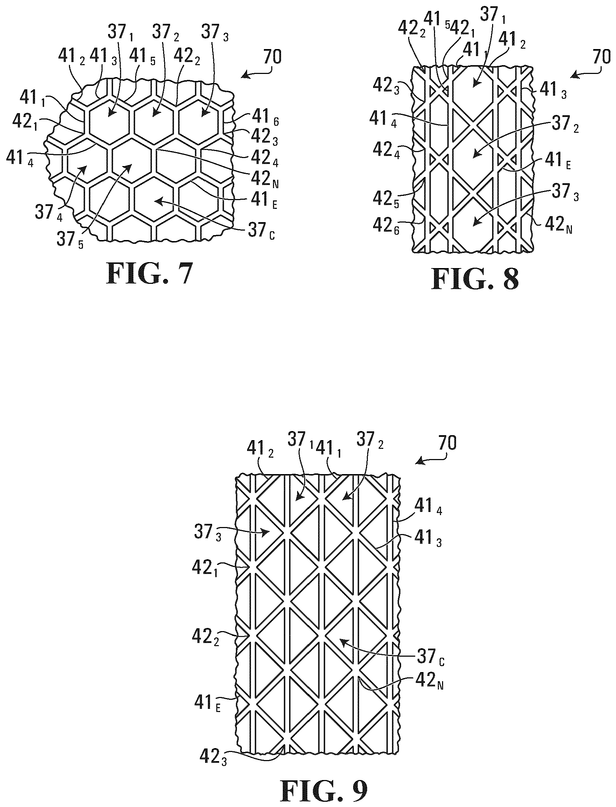

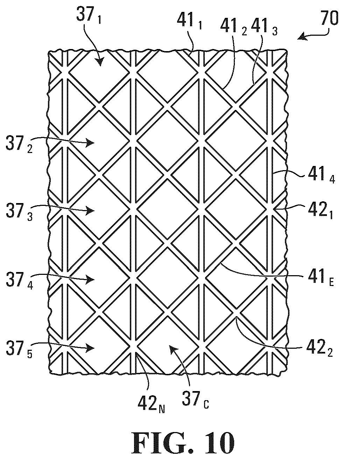

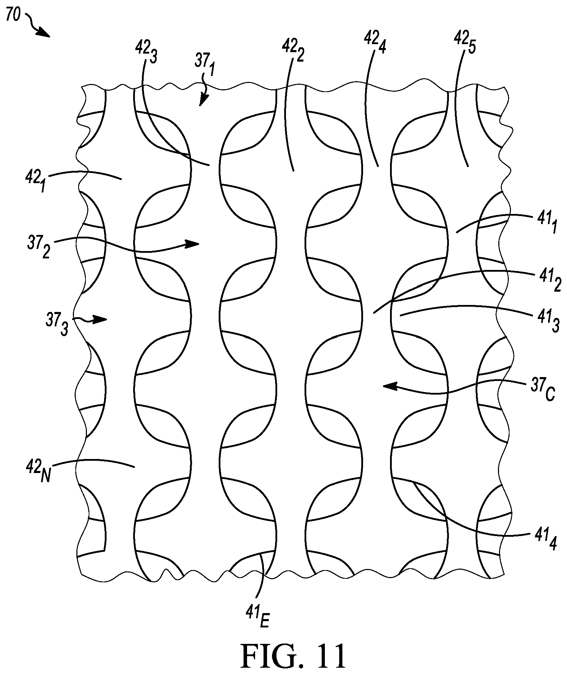

The lattice 70 may be implemented in any other suitable way and have any other suitable configuration. Examples of other possible configurations for the lattice 70 in other embodiments are shown in Figures 7 to 11.

In some embodiments, the hockey stick may be an "intelligent" hockey stick. That is, the hockey stick 10 may comprise sensors 280₁-280ₛ to sense a force acting on the hockey stick, a position, a speed, an acceleration and/or a deformation of the hockey stick 10 during play or during a testing (e.g. of hockey sticks, of players, etc.). More particularly, in this embodiment, the lattice 70 comprises the sensors 280₁-280ₛ. More specifically, in this embodiment, the sensors 280₁-280ₛ are associated with an additively-manufactured component of the lattice 70.

Further, in this embodiment, the hockey stick 10 may comprise actuators 286₁-286_{A}. Specifically, the actuators 286₁-286_{A} may be associated with at least some of sensors 280₁-280ₛ and may be configured to respond to a signal of the sensors 280₁-280ₛ. In particular, the sensors 280₁-280ₛ may be responsive to an event (e.g. an increase in acceleration of the hockey stick 10, an increase of a force acting on the hockey stick 10, an increase of the deformation of the hockey stick 10, etc.) to cause the actuators 286₁-286_{A} to alter the additively-manufactured component to alter the lattice 70 (e.g. to increase resilience, to increase stiffness, etc.).

Practically, in this embodiment, this may be achieved using piezoelectric material 290 implementing the sensors 280₁-280ₛ, the piezoelectric material 290 being comprised in the additively-manufactured component of the lattice 70.

In other embodiments, more or less of the hockey stick 10 may be latticed as discussed above.

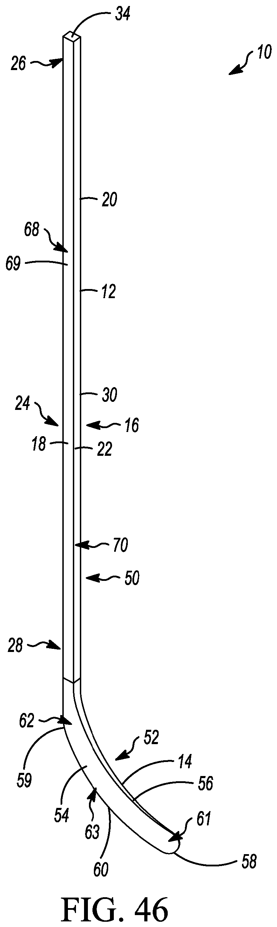

For example, in some embodiments, as shown in Figure 46, the lattice 70 may constitute at least part (e.g., occupy at least a majority, i.e., a majority or an entirety, of the length) of the shaft 12, but not constitute any part of the blade 14. That is, the shaft 12 may include all of the lattice 70, while the blade 14 may not include any lattice.

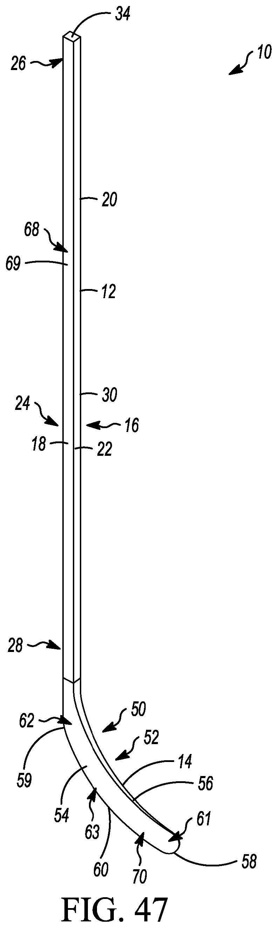

As another example, in some embodiments, as shown in Figure 47, the lattice 70 may constitute at least part (e.g., occupy at least a majority, i.e., a majority or an entirety, of the length) of the blade 14, but not constitute any part of the shaft 12. That is, the blade 14 may include all of the lattice 70, while the shaft 12 may not include any lattice.

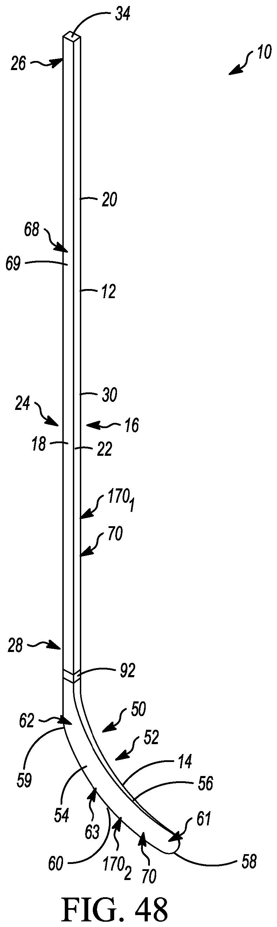

As yet another example, as shown in Figures 48, the shaft 12 and/or the blade 14 may include two or more lattices like the lattice 70 that are separate (e.g., spaced apart) from one another.

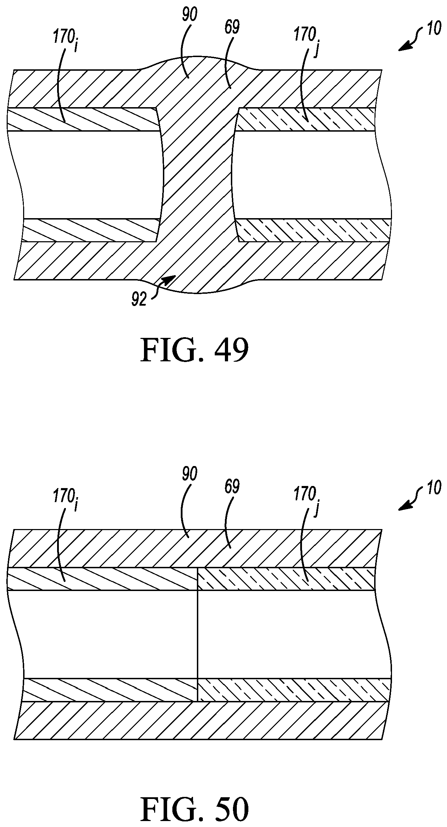

For instance, in some embodiments, as shown in Figures 48 and 49, the blade 14 may comprises lattices 170₁-170_{L} similar to the lattice 70 that are separate from one another. In this example, adjacent ones of the lattices 170₁-170_{L} are spaced from one another by a rib 92 extending from a front one of the walls 80₁-80₆ of the blade 14 to a back one of the walls 80₁-80₆ of the blade 14. The lattices 170₁-170_{L} may be or include distinct zones structurally different from one another, as discussed above. For example, in some embodiments, a lower one of the lattices 170₁-170_{L} may be less stiff or more resilient than a higher one of the lattices 170₁-170_{L} (e.g., to better absorb impacts).

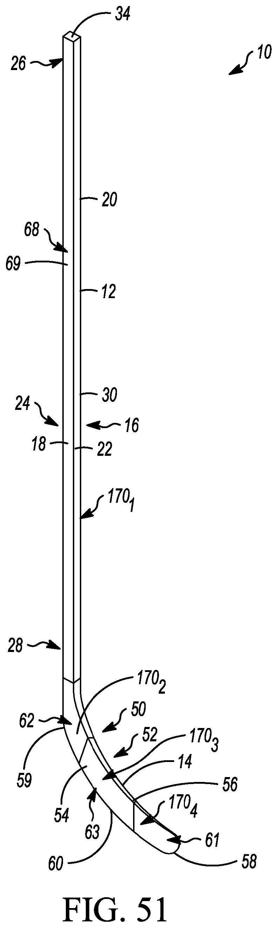

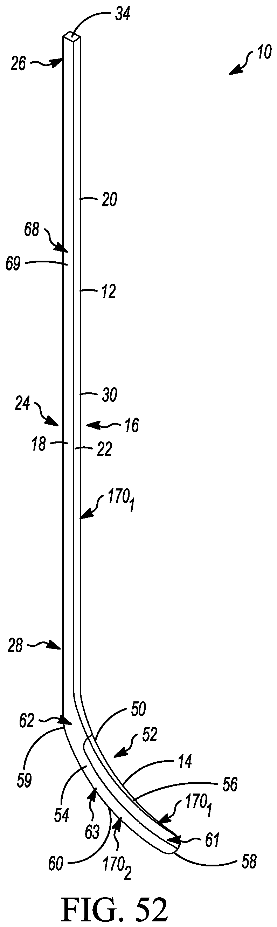

In some embodiments, as shown in Figure 50, the lattices 170₁-170_{L} may not be spaced from one another by a rib 92 and may engage one another. For example, in some embodiments, the blade 14 may comprise different lattices 170₁-170_{L} each covering a given one of the toe portion 61, the heel portion 62 and the intermediate portion 63, as shown in Figure 51. As another example, in some embodiments, the blade 14 may comprise different lattices 170₁, 170₂ the lattice 170₁ defining an upper portion of the blade 14 and the lattice 170₂ defining a lower portion of the blade 14, the lattice 170₂ being lighter but less stiff than the lattice 170₁ in order to facilitate handling (e.g. by increasing vibration damping and diminishing weight of the blade 14) and still increase energy transfer to a hockey puck (e.g. by having a relatively stiff blade 14), as shown in Figure 52.

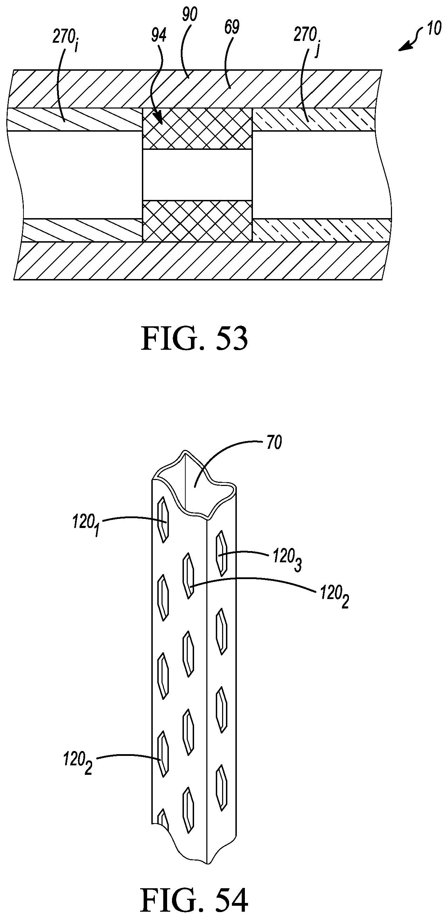

In some embodiments, , as shown in Figure 53, the shaft 12 may comprises lattices 270₁-270_{L} similar to the lattice 70 that are separate from one another. In this example, adjacent ones of the lattices 270₁-270_{L} are spaced from one another by a non-latticed portion 94. The lattices 270₁-270_{L} may be or include distinct zones structurally different from one another, as discussed above. For example, in some embodiments, a lower one of the lattice 270₁-270_{L} may be less stiff or more resilient than a higher one of the lattices 270₁-270_{L} (e.g., to adjust the flex of the hockey stick 10).

In some embodiments, as shown in Figures 54 to 56, the lattice 70 may comprise recesses 120₁-120_{R} and/or ribs 122₁-122_{R} in order to provide a stick 10 which facilitates puck handling, facilitates grip, increases power transmission and/or energy transmission from the hockey stick 10 to the puck during wrist shots and/or slap shots, is light, increases impact resistance of the hockey stick 10, increases elongation at break of the hockey stick 10, is relatively cheap to manufacture, and so on. In some embodiments, a depth of the recesses 120₁-120_{R} and/or ribs 122₁-122_{R} may be insignificant and may improve an appearance and a touch (i.e. a feel) of the stick 10. For example, in some embodiments, the depth of the recesses 120₁-120_{R} and/or ribs 122₁-122_{R} may be no more than 1.5 mm, in some embodiments no more than 1 mm, in some embodiments no more than 0.5 mm and in some embodiments even less. However, in some embodiments, the depth of the recesses 120₁-120_{R} and/or ribs 122₁-122_{R} may be significant and may increase stiffness of the stick 10 and/or reduce weight of the stick 10. For example, in some embodiments, the depth of the recesses 120₁-120_{R} and/or ribs 122₁-122_{R} may be at least 1.5 mm, in some embodiments at least 2 mm, in some embodiments at least 3 mm, in some embodiments at least 4 mm, in some embodiments at least 5 mm, and in some embodiments even more.

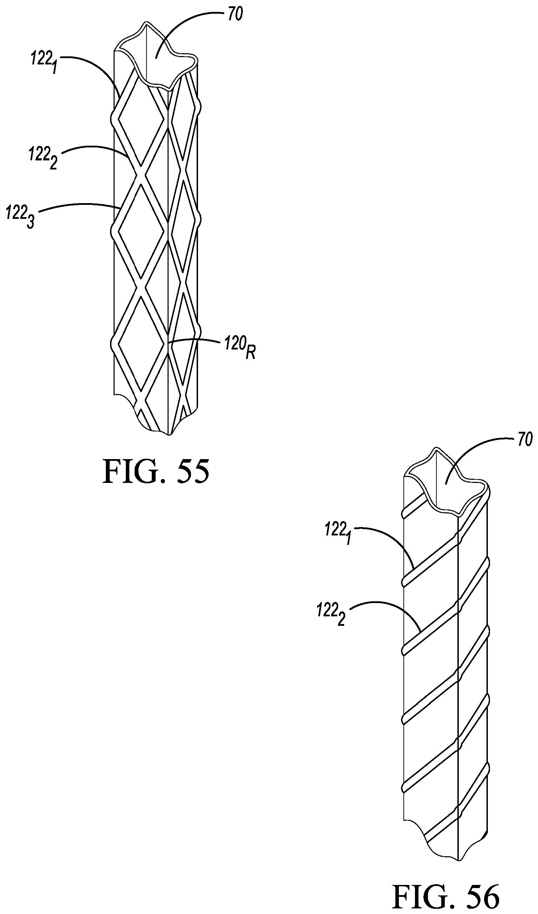

Further, in some embodiments, as shown in Figure 56, the lattice 70 may be anisotropic. For instance, a torsional stiffness of the lattice 70 may be greater in one direction than in another opposite direction. This may allow the stick to be light, yet to resist repetitive impacts when the impacts are expected to be mostly in the same direction. In this embodiment, this is achieved by having the lattice 70 defining rib 122₁, 122₂ which are configured for supporting the lattice 70 when the lattice 70 is subject to torsional stress in one direction but not for supporting the lattice 70 when the lattice 70 is subject to torsional stress in the other opposite direction.

Alternatively, in some embodiments, instead of being formed by the lattice 70, the 120₁-120_{R} and/or ribs 122₁-122_{R} may be formed by the covering 69 around the lattice 70.

In some embodiments, the hockey stick 10 may comprise one or more additively-manufactured components, instead of or in addition to the lattice 70. That is, the lattice 70 is one example of an additively-manufactured component in embodiments where it is 3D-printed. Such one or more additively-manufactured components of the hockey stick 10 may be 3D-printed as discussed above, using any suitable 3D-printing technology, similar to what was discussed above in relation to the lattice 70 in embodiments where the lattice 70 is 3D-printed. The hockey stick 10 may comprise the lattice 70, which may or may not be additively-manufactured, or may not have any lattice in embodiments where the hockey stick 10 comprises such one or more additively-manufactured components.

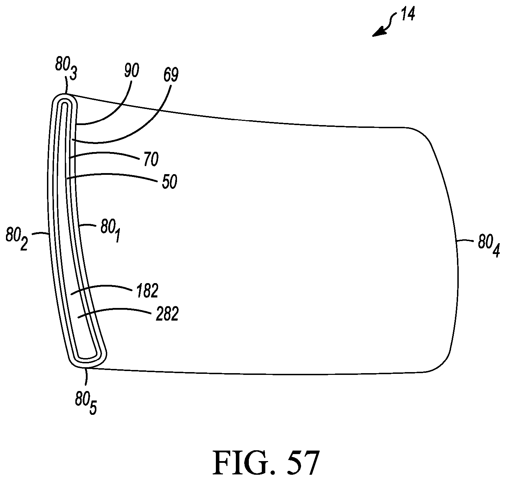

For example, in some embodiments, as shown in Figure 57, the blade 14 may comprises an additively-manufactured core 182. In this embodiment, the additively-manufactured core 182 comprises a 3D-printed lattice 282 that can be constructed and configured similarly to what is discussed above in relation of the lattice 70, in embodiments where the lattice 70 is 3D-printed.

The 3D-printed lattice 282 of the core 182 of the blade 14 may be manufactured in any suitable way, using any suitable materials and may have any suitable mechanical properties, such as those described with regards to the lattice 70. In this embodiment, the 3D-printed lattice 282 is manufactured prior to the lattice 70, while in other embodiments, the 3D-printed lattice 282 and the lattice 70 are manufactured simultaneously.

In some embodiments, the method of manufacture, the materials and the structure of the lattices 70, 282 forming the blade 14 may differ. For instance, the lattice 282 may be lighter (i.e. less dense) but less stiff than the lattice 70 which is over the lattice 282 and thus may provide stiffness to the blade 14 more efficiently.

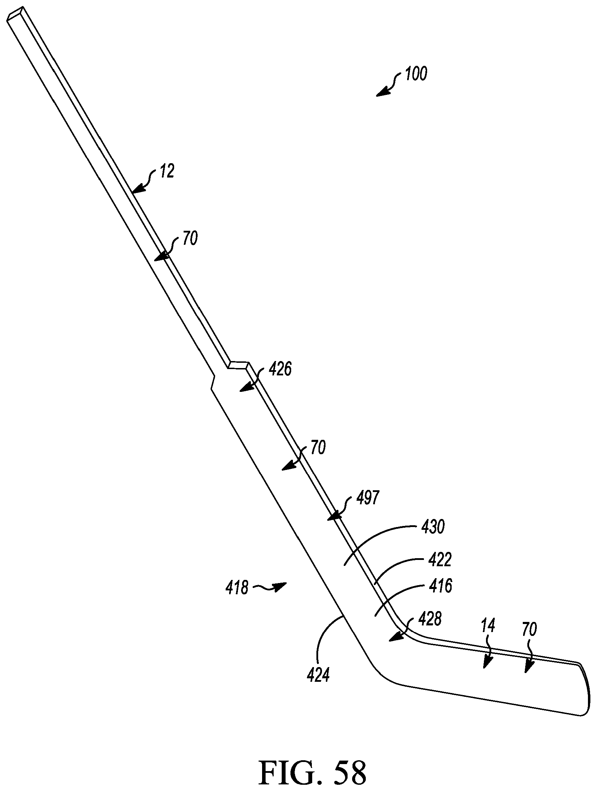

While in this embodiment the hockey stick 10 is a player stick for the user that is a forward, i.e., right wing, left wing, or center, or a defenseman, in other embodiments, as shown in Figure 58, the hockey stick 10 may be a goalie stick where the user is a goalie. The goalie stick 10 may be constructed according to principles discussed herein. For example, in some embodiments, the goalie stick 10 may comprise the lattice 70 (e.g., which may be additively-manufactured or otherwise made) and/or one or more other additively-manufactured components, as discussed above.

The goalie stick 10 comprises a paddle 497 that may be constructed according to principles discussed herein. For instance, in some embodiments, the paddle 497 may be disposed between the shaft 12 and the blade 14. The paddle 497 is configured to block hockey pucks from flying into the net. A periphery 430 of the paddle 497 includes a front surface 416 and a rear surface 418 opposite one another, as well as a top edge 422 and a bottom edge 424 opposite one another. Proximal and distal end portions 426, 428 of the paddle 497 are spaced apart in a longitudinal direction of the paddle 497, respectively adjacent to the shaft 12 and the blade 14, and define a length of the paddle 497. More particularly, in this embodiment, at least part of the goalie stick 10 is latticed, i.e., comprises the lattice 70. Thus, in this example, the lattice 70 (e.g., which may be additively-manufactured or otherwise made) and/or one or more other additively-manufactured components constitutes at least part of the shaft 12 and/or at least part of the blade 14 and/or at least part of the paddle 497 in a similar fashion as described above with regards to the hockey player stick 10.

Although in this embodiment the sporting implement 10 is a hockey stick, in other embodiments, the sporting implement 10 may be any other implement used for striking, propelling or otherwise moving an object in a sport.

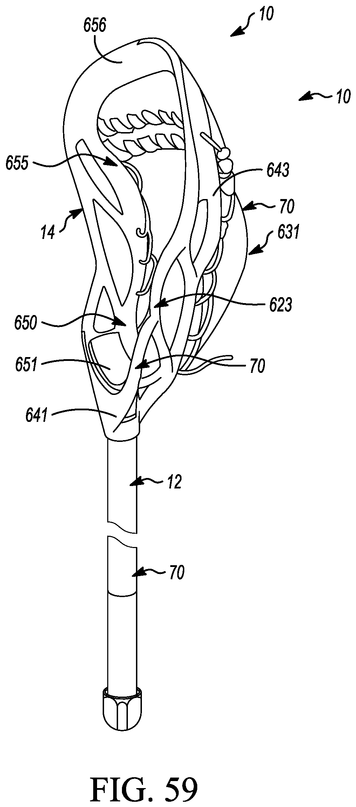

For example, in other embodiments, as shown in Figure 59, the sporting implement 10 may be a lacrosse stick for a lacrosse player, in which the object-contacting member 14 of the lacrosse stick 10 comprises a lacrosse head for carrying, shooting and passing a lacrosse ball.

The lacrosse head 14 comprises a frame 623 and a pocket 631 connected to the frame 623 and configured to hold the lacrosse ball. The frame 623 includes a base 641 connected to the shaft 12 and a sidewall 643 extending from the base 641. In this embodiment, the sidewall 643 is shaped to form a narrower area 650 including a ball stop 651 adjacent to the base 641 and an enlarged area 655 including a scoop 656 opposite to the base 641. Also, in this embodiment, the pocket 31 includes a mesh 660.

The lacrosse stick 10 may be constructed according to principles discussed herein. For example, in some embodiments, the lacrosse stick 10 may comprise the lattice 70 (e.g., which may be additively-manufactured or otherwise made) and/or one or more other additively-manufactured components, as discussed above. For instance, in some embodiments, the lattice 70 (e.g., which may be additively-manufactured or otherwise made) and/or one or more other additively-manufactured components may constitute at least part of the shaft 12 and/or at least part of the lacrosse head 14, such as at least part of the frame 623 and/or at least part of the pocket 631, according to principles discussed herein.

In other embodiments, as shown in Figure 60, the sporting implement 10 may be a ball bat (e.g., a baseball or softball bat) for a ball player, in which the object-contacting member 14 of the ball bat 10 comprises a barrel for hitting a ball.

The ball bat 10 may be constructed according to principles discussed herein. For example, in some embodiments, the ball bat 10 may comprise the lattice 70 (e.g., which may be additively-manufactured or otherwise made) and/or one or more other additively-manufactured components, as discussed above. For instance, in some embodiments, the lattice 70 (e.g., which may be additively-manufactured or otherwise made) and/or one or more other additively-manufactured components may constitute at least part of a handle 866 of the elongate holdable member 12 and/or at least part of the barrel 14, according to principles discussed herein.

Any feature of any embodiment described herein may be combined with any feature of any other embodiment described herein in some examples of implementation.

Certain additional elements that may be needed for operation of certain embodiments have not been described or illustrated as they are assumed to be within a purview of those of ordinary skill. Moreover, certain embodiments may be free of, may lack and/or may function without any element that is not specifically disclosed herein.

Although various embodiments and examples have been presented, this was for purposes of describing but should not be limiting. Various modifications and enhancements will become apparent to those of ordinary skill and are within a scope of this disclosure. The scope of the invention is defined by the appended claims.

## Claims

1. A hockey stick (10) comprising:
- a blade (14); and
- a shaft (12) to be held by a user;
wherein the hockey stick (10) comprises an additively-manufactured lattice (70) including 3D-printed fiber-reinforced composite material (50), **characterised by**
the additively-manufactured lattice (70) being 3D-printed using continuous-fiber 3D printing and occupying at least one of at least a majority of a length of the blade (14) and at least a majority of a length of the shaft (12).

2. The hockey stick (10) of claim 1, comprising a covering (69) that covers at least part of the additively-manufactured lattice (70).

3. The hockey stick (10) of claim 2, wherein the covering (69) includes fiber-reinforced composite material (90) about the 3D-printed fiber-reinforced composite material (50) of the additively-manufactured lattice (70).

4. The hockey stick (10) of claim 3, wherein: the covering (69) is an additively-manufactured covering; and the fiber-reinforced composite material (90) of the covering is 3D-printed fiber-reinforced composite material.

5. The hockey stick (10) of any one of claims 1 to 4, wherein the additively-manufactured lattice (70) occupies an entirety of the length of the shaft (12).

6. The hockey stick (10) of any one of claims 1 to 5, wherein the additively-manufactured lattice (70) occupies an entirety of the length of the blade (14).

7. The hockey stick (10) of any one of claims 1 to 6, wherein the additively-manufactured lattice (70) comprises a framework of elongate members (41₁-41_{E}) that intersect one another at nodes (42₁-42_{N}).

8. The hockey stick (10) of claim 7, wherein given ones of the nodes (42₁-42_{N}) are thicker than respective ones of the elongate members (41₁-41_{E}) that intersect one another thereat.

9. The hockey stick (10) of any one of claims 7 and 8, wherein adjacent ones of the nodes (42₁-42_{N}) in a first region of the additively-manufactured lattice (70) are located closer to one another than adjacent ones of the nodes in a second region of the additively-manufactured lattice (70).

10. The hockey stick (10) of any one of claims 1 to 9, wherein the additively-manufactured lattice (70) comprises peripheral portions (74₁-74₄) that are part of walls (75₁-75₄) of the hockey stick that define a periphery (30) of at least one of the shaft (12) and the blade (14).

11. The hockey stick (10) of claim 10, wherein the additively-manufactured lattice (70) comprises a void (76) between the peripheral portions (74₁-74₄) of the additively-manufactured lattice.

12. The hockey stick (10) of claim 11, comprising a core (77) disposed in the void (76) of the additively-manufactured lattice (70).

13. The hockey stick (10) of claim 12, wherein the core (77) includes foam.

14. The hockey stick (10) of claim 2, wherein the covering (69) covers at least a majority of the additively-manufactured lattice (70).

15. The hockey stick (10) of any one of claims 1 to 14, wherein a strength of the lattice is at least 1000N.

16. The hockey stick (10) of any one of claims 1 to 15, wherein at least one fiber of the 3D-printed fiber-reinforced composite material (50) of the additively-manufactured lattice (70) extends along at least a majority of a length of the additively-manufactured lattice.

17. The hockey stick (10) of claim 16, wherein the at least one fiber of the 3D-printed fiber-reinforced composite material (50) of the additively-manufactured lattice (70) extends along an entirety of the length of the additively-manufactured lattice.

18. The hockey stick (10) of any one of claims 1 to 17, wherein the hockey stick is a player stick.

## Patentansprüche

1. Hockeyschläger (10), umfassend:
- eine Kelle (14); und
- einen Griff (12), welcher von einem Benutzer zu halten ist;
wobei der Hockeyschläger (10) ein additiv hergestelltes Gitter (70) umfasst, welches 3D-gedrucktes faserverstärktes Verbundmaterial (50) umfasst,
**dadurch gekennzeichnet, dass** das additiv hergestellte Gitter (70) unter Verwendung von 3D-Druck mit kontinuierlichen Fasern 3D-gedruckt ist und wenigstens eines von wenigstens einer Mehrheit einer Länge der Kelle (14) und wenigstens einer Mehrheit einer Länge des Griffs (12) einnimmt.

2. Hockeyschläger (10) nach Anspruch 1, umfassend eine Abdeckung (69), welche wenigstens einen Teil des additiv hergestellten Gitters (70) bedeckt.

3. Hockeyschläger (10) nach Anspruch 2, wobei die Abdeckung (69) faserverstärktes Verbundmaterial (90) über dem 3D-gedruckten faserverstärkten Verbundmaterial (50) des additiv hergestellten Gitters (70) umfasst.

4. Hockeyschläger (10) nach Anspruch 3, wobei: die Abdeckung (69) eine additiv hergestellte Abdeckung ist und das faserverstärkte Verbundmaterial (90) der Abdeckung 3D-gedrucktes faserverstärktes Verbundmaterial ist.

5. Hockeyschläger (10) nach einem der Ansprüche 1 bis 4, wobei das additiv hergestellte Gitter (70) eine Gesamtheit der Länge des Griffs (12) einnimmt.

6. Hockeyschläger (10) nach einem der Ansprüche 1 bis 5, wobei das additiv hergestellte Gitter (70) eine Gesamtheit der Länge der Kelle (14) einnimmt.

7. Hockeyschläger (10) nach einem der Ansprüche 1 bis 6, wobei das additiv hergestellte Gitter (70) einen Rahmen aus länglichen Elementen (41₁ - 41_{E}) umfasst, welche einander bei Knoten (42₁ - 42_{N}) schneiden.

8. Hockeyschläger (10) nach Anspruch 7, wobei gegebene der Knoten (42₁ - 42_{N}) dicker als entsprechende der länglichen Elemente (41₁ - 41_{E}) sind, welche einander dort schneiden.

9. Hockeyschläger (10) nach einem der Ansprüche 7 und 8, wobei benachbarte der Knoten (42₁ - 42_{N}) in einer ersten Region des additiv hergestellten Gitters (70) näher zueinander angeordnet sind als benachbarte der Knoten in einer zweiten Region des additiv hergestellten Gitters (70).

10. Hockeyschläger (10) nach einem der Ansprüche 1 bis 9, wobei das additiv hergestellte Gitter (70) periphere Abschnitte (74₁ - 74₄) umfasst, welche ein Teil von Wänden (75₁ - 75₄) des Hockeyschlägers sind, welche eine Peripherie (30) von wenigstens einem aus dem Griff (12) und der Kelle (14) definieren.

11. Hockeyschläger (10) nach Anspruch 10, wobei das additiv hergestellte Gitter (70) einen Freiraum (76) zwischen den peripheren Abschnitten (74₁ - 74₄) des additiv hergestellten Gitters umfasst.

12. Hockeyschläger (10) nach Anspruch 11, umfassend einen Kern (77), welcher in dem Freiraum (76) des additiv hergestellten Gitters (70) angeordnet ist.

13. Hockeyschläger (10) nach Anspruch 12, wobei der Kern (77) Schaum umfasst.

14. Hockeyschläger (10) nach Anspruch 2, wobei die Abdeckung (69) wenigstens eine Mehrheit des additiv hergestellten Gitters (70) bedeckt.

15. Hockeyschläger (10) nach einem der Ansprüche 1 bis 14, wobei eine Stärke des Gitters wenigstens 1000N beträgt.

16. Hockeyschläger (10) nach einem der Ansprüche 1 bis 15, wobei sich wenigstens eine Faser des 3D-gedruckten faserverstärkten Verbundmaterials (50) des additiv hergestellten Gitters (70) entlang wenigstens einer Mehrheit einer Länge des additiv hergestellten Gitters erstreckt.

17. Hockeyschläger (10) nach Anspruch 16, wobei sich die wenigstens eine Faser des 3D-gedruckten faserverstärkten Verbundmaterials (50) des additiv hergestellten Gitters (70) entlang einer Gesamtheit der Länge des additiv hergestellten Gitters erstreckt.

18. Hockeyschläger (10) nach einem der Ansprüche 1 bis 17, wobei der Hockeyschläger ein Spielerschläger ist.

## Revendications

1. Crosse de hockey (10) comprenant :
- une lame (14) ; et
- un manche (12) à tenir par un utilisateur ;
dans laquelle la crosse de hockey (10) comprend un treillis fabriqué de manière additive (70) comportant un matériau composite renforcé par fibres imprimé en 3D (50), **caractérisé par le fait que** le treillis fabriqué de manière additive (70) est imprimé en 3D à l'aide d'une impression 3D en fibre continue et occupe au moins une parmi au moins une majorité d'une longueur de la lame (14) et au moins une majorité d'une longueur du manche (12).

2. Crosse de hockey (10) selon la revendication 1, comprenant un revêtement (69) qui recouvre au moins une partie du treillis fabriqué de manière additive (70).

3. Crosse de hockey (10) selon la revendication 2, dans laquelle le revêtement (69) comporte un matériau composite renforcé par fibres (90) autour du matériau composite renforcé par fibres imprimé en 3D (50) du treillis fabriqué de manière additive (70).

4. Crosse de hockey (10) selon la revendication 3, dans laquelle : le revêtement (69) est un revêtement fabriqué de manière additive ; et le matériau composite renforcé par fibres (90) du revêtement est un matériau composite renforcé par fibres imprimé en 3D.

5. Crosse de hockey (10) selon l'une quelconque des revendications 1 à 4, dans laquelle le treillis fabriqué de manière additive (70) occupe une totalité de la longueur du manche (12).

6. Crosse de hockey (10) selon l'une quelconque des revendications 1 à 5, dans laquelle le treillis fabriqué de manière additive (70) occupe une totalité de la longueur de la lame (14).

7. Crosse de hockey (10) selon l'une quelconque des revendications 1 à 6, dans laquelle le treillis fabriqué de manière additive (70) comprend un cadre d'éléments allongés (41₁-41_{E}) qui se croisent au niveau de nœuds (42₁-42_{N}).

8. Crosse de hockey (10) selon la revendication 7, dans laquelle certains des nœuds (42₁-42_{N}) sont plus épais que des éléments allongés respectifs parmi les éléments allongés (41₁-41_{E}) qui se croisent à ce niveau.

9. Crosse de hockey (10) selon l'une quelconque des revendications 7 et 8, dans laquelle des nœuds (42₁-42_{N}) adjacents dans une première région du treillis fabriqué de manière additive (70) sont situés plus près les uns des autres que des nœuds adjacents dans une seconde région du treillis fabriqué de manière additive (70).

10. Crosse de hockey (10) selon l'une quelconque des revendications 1 à 9, dans laquelle le treillis fabriqué de manière additive (70) comprend des parties périphériques (74₁-74₄) qui font partie de parois (75₁-75₄) de la crosse de hockey qui définissent une périphérie (30) d'au moins un parmi le manche (12) et la lame (14).

11. Crosse de hockey (10) selon la revendication 10, dans laquelle le treillis fabriqué de manière additive (70) comprend un vide (76) entre les parties périphériques (74₁-74₄) du treillis fabriqué de manière additive.

12. Crosse de hockey (10) selon la revendication 11, comprenant un noyau (77) disposé dans le vide (76) du treillis fabriqué de manière additive (70).

13. Crosse de hockey (10) selon la revendication 12, dans laquelle le noyau (77) comporte de la mousse.

14. Crosse de hockey (10) selon la revendication 2, dans laquelle le revêtement (69) recouvre au moins une majorité du treillis fabriqué de manière additive (70).

15. Crosse de hockey (10) selon l'une quelconque des revendications 1 à 14, dans laquelle une résistance du treillis est d'au moins 1000 N.

16. Crosse de hockey (10) selon l'une quelconque des revendications 1 à 15, dans laquelle au moins une fibre du matériau composite renforcé par fibres imprimé en 3D (50) du treillis fabriqué de manière additive (70) s'étend le long d'au moins une majorité d'une longueur du treillis fabriqué de manière additive.

17. Crosse de hockey (10) selon la revendication 16, dans laquelle l'au moins une fibre du matériau composite renforcé par fibres imprimé en 3D (50) du treillis fabriqué de manière additive (70) s'étend sur une totalité de la longueur du treillis fabriqué de manière additive.

18. Crosse de hockey (10) selon l'une quelconque des revendications 1 à 17, dans laquelle la crosse de hockey est une crosse de joueur.
